# EUROPEAN PATENT SPECIFICATION

(11) **EP 0 784 163 B1**
(45) Date of publication and mention of the grant of the patent: **03.07.2002**
(21) Application number: 96307979.3
(22) Date of filing: 04.11.1996
(51) Int. Cl.: F16F 9/53, F16F 9/30, F16F 1/38

(54) **Variable stiffness bushing using magnetorheological elastomers**
Magnetorheologisches Elastomer benutzende Buchse mit veränderlicher Steifigkeit
Manchon à rigidité variable utilisant élastomères magnétorhéologiques

(30) Priority: 11.01.1996 US 585026
(43) Date of publication of application: 16.07.1997
(73) Proprietor: FORD MOTOR COMPANY LIMITED, Brentwood, Essex CM13 3BW (GB); FORD FRANCE S.A., 92506 Rueil-Malmaison Cédex (FR); FORD-WERKE AKTIENGESELLSCHAFT, 50735 Köln (DE)
(72) Inventor: Elie, Larry D., Ypsilanti, Michigan 48197 (US); Ginder, John M., Plymouth, Michigan 48170 (US); Stewart, William M., Livonia, Michigan 48154 (US); Nichols, Mark E., Saline, Michigan 48176 (US)
(74) Representative: Messulam, Alec Moses

(56) References cited:
- EP-A- 0 298 266
- DE-A- 3 912 058
- FR-A- 2 579 283
- GB-A- 1 259 802
- US-A- 4 869 476
- US-A- 5 337 865
- PATENT ABSTRACTS OF JAPAN vol. 016, no. 047 (M-1208), 6 February 1992 & JP 03 249440 A (TOYODA GOSEI CO LTD), 7 November 1991,
- PATENT ABSTRACTS OF JAPAN vol. 014, no. 135 (M-0949), 14 March 1990 & JP 02 003722 A (TOYOTA MOTOR CORP), 9 January 1990,
- SMART MATER. STRUCT., no. 5, 1996, UK, pages 607-614, XP002030580 M.R. JOLLY ET AL.: "A model of the behaviour of magnetorheological materials"

## Description

The present invention relates to a method of making and using a suspension bushing, and more particularly, for example, to an automotive vehicle suspension bushing whose stiffness is controllable over a wide range of values by means of predetermined electrical current input values.

FR-A-2579283 discloses a method of making and using a variable stiffness suspension bushing for controlling the relative displacement of a suspension control arm in an automotive vehicle relative to a frame component of said vehicle, comprising the steps of providing a first structural component for connection to a suspension control arm of a vehicle and providing a second structural component for connection to a frame of said vehicle.

Vehicle ride and handling performance are strongly influenced by means of the make-up or composition, and therefore, the resulting operative characteristics or parameters, of the various bushings and mounts utilised within the automotive vehicle suspension system. Relatively small changes in the spring rate or stiffness value of a particular mount or bushing can dramatically influence vehicle understeer, oversteer, roll, downward dive or dip, and upward squat characteristics, as well as chassis noise, vibration, and vehicle ride harshness, that is, the way the vehicle appears to ride upon a particular road surface whereby the vehicle exhibits a relatively "soft" ride or a relatively "hard" ride.

In connection with the set-up and calibration of automotive vehicle suspension systems, the spring rates of the bushings or mounts which are necessary to ideally optimise overall performance of the vehicle have been heretofore determined by means of a lengthy trial and error process. In some cases, it has been realised that the various operating conditions that will be encountered during driving of the vehicle cannot in fact be accommodated by means of a single set of conventional bushings or mounts which merely exhibit or are characterised by means of fixed-stiffness parameters or values. Accordingly, suspension technology and techniques have sought to incorporate non-linear or variable rate fluid-filled hydrobushings or hydromounts within particular suspension systems.

One type of conventional, non-linear or variable rate fluid-filled hydrobushing or hydromount comprises the use of electrorheological (ER) fluids incorporated within the bushing or mount. Electrorheological (ER) fluids consist of electrically polarizable particles suspended in an insulating fluid. By applying a high or large electric field to the electrorheological fluid, electric dipoles and higher order multipoles are induced within the suspended particles. The dipolar or multipolar particles experience mutual attraction with respect to each other whereby the particles are caused to form chains or other aligned structures that enable the fluids to exhibit solid-like mechanical properties. Removal or termination of the electric filed, in accordance with predetermined condition-controlled techniques, causes the dipoles or multipoles to effectively disappear whereby the field-induced solid reverts to its initial non-induced fluid state. These dramatic, controllable changes in the rheological or mechanical properties of such fluids enables the desirable construction of electromechanical devices or components which can be effectively incorporated within various automotive sub-systems, such as, for example, clutches, shock absorbers, engine mounts, chassis mounts, and the like.

Another type of conventional non-linear or variable rate fluid-filled hydrobushing or hydromount comprises the use of magnetorheological (MR) fluids incorporated within the bushing or mount. Magnetorheological (MR) fluids are the magnetic analogs of electrorheological (ER) fluids, and are produced by suspending magnetisable particles within a carrier fluid of low magnetic permeability. In use, instead of applying an electric field to such suspensions, a magnetic field is in fact used to induce the desired changes in the suspension's rheological or mechanical properties through means of magnetisation and interparticle interactive principles of physics which are similar or analogous to those previously set forth briefly in connection with the electrorheological (ER) fluids. Consequently, the development of such magnetorheological (MR) fluids has likewise led to the construction of similar electromechanical devices or components which can be effectively incorporated within the various, previously noted automotive sub-systems, such as, for example, clutches, shock absorbers, engine mounts, chassis mounts, and the like.

While the aforenoted development of hydrobushings or hydromount technology employing either electrorheological or magnetorheological fluids has, in turn, led to the development and construction of desirable non-linear or variable rate electromechanical devices or components which can be effectively incorporated within the various automotive vehicle sub-systems as noted hereinbefore, a major problem that has been encountered in connection with the employment of such hydrobushings or hydromounts utilising either electrorheological or magnetorheological fluids is that the particles dispersed or suspended within the working electrorheological or magnetorheological fluid tend to settle out of suspension over a period of time due, apparently, to the density mismatch between the particles and the host fluid. In addition, in view of the fact that such hydrobushing or hydromount devices or components utilise or comprise fluids, the devices or components must necessarily be provided with appropriate seals in order to prevent any leakage of the electrorheological or magnetorheological fluid from the hydromount or hydrobushing.

A solution to the aforenoted problems encountered in connection with working electrorheological or magnetorheological fluids has been to embed, for example, the electrically polarizable particles within a viscoelastic solid, such as, for example, a polymer gel, in lieu of suspending or dispersing the particles within an insulating fluid. Operative characteristics of such electrorheological gels or elastomers have proven to be as anticipated and desired, that is, for example, the composite materials have exhibited solid-like properties, such as, for example, a non-zero shear modulus, even in the absence of an electrical field, and in addition, when the materials have been subjected to an electrical field, the shear modulus increases. The stiffness of such composite materials has therefore been able to be controlled electrically whereby such composite materials can be fabricated into or employed within the desired electromechanical devices, that is, for example, engine mounts, transmission mounts, chassis mounts, suspension bushings, and the like. Nevertheless, the actual or practical incorporation of such composite materials within the noted electromechanical devices, or the actual or practical fabrication or development of such electromechanical devices, in order to render such devices viable within the automotive environment, has proven problematical. For example, in order for such electrorheological gels or elastomers to be operative, a source of high voltage is required. Therefore, an immediate concern not only arises in connection with safety procedures surrounding the generation, application, and control of such high voltage within the automotive environment, but in addition, the practical logistics of actually providing and incorporating such a source of high voltage within an automotive vehicle.

Accordingly, in order to overcome the various operational and logistical drawbacks or disadvantages characteristic of or operatively associated with the use of electrorheological (ER) elastomers or gels, magnetorheological (MR) gels or elastomers have been developed wherein magnetisable particles are dispersed within a viscoelastic solid so as to produce a composite material whose mechanical properties can be modulated by means of an applied magnetic field. In view of the fact that such magnetorheological (MR) gels or elastomers are operative under or subjected to magnetic fields generated by low voltage, high current signals, as opposed to high voltage, low current electrical fields utilised in connection with the aforenoted electrorheological elastomers or gels, potentially dangerous high voltage conditions are effectively eliminated, as is the need for the provision of a source of high voltage. In particular, therefore, the voltage requirements for the magnetorheological elastomers or gels can be readily satisfied within the automotive environment by means of the automotive vehicle electrical system.

While practical or viable magnetorheological (MR) gels or elastomers have therefore been developed for potential use within the aforenoted electromechanical devices or components, a need therefore exists for the provision or production of a practical, useful, or operative electromechanical device or component of the aforenoted type, that is, for example, an engine mount, transmission mount, chassis mount, shock mount, strut mount, drivetrain damper, or suspension bushing, which may be readily incorporated within an automotive vehicle.

Accordingly, the present invention seeks to provide a new and improved non-linear or variable stiffness automotive vehicle mount, coupling, or suspension component which comprises a magnetorheological (MR) elastomer whose stiffness is variably adjustable or controllable over a wide range of values by means of a predeterminedly controllable magnetic field which is generated by means of an electromagnet structure which is integrally incorporated within the automotive vehicle mount, coupling, or suspension component structure, and wherein the electromagnet structure is able to be operatively energised by means of voltage derived from the automotive vehicle electrical system and at current levels or values which are generated as functions of, or in response to, various vehicle operational parameters.

According to the invention there is provided a method of making and using a variable stiffness suspension bushing for controlling the relative displacement of a suspension control arm in an automotive vehicle relative to a frame component of said vehicle, comprising the steps of
providing a first structural component for connection to a suspension control arm of a vehicle;
providing a second structural component for connection to a frame component of said vehicle; and
interposing an uncured magnetorheological elastomer, having magnetisable particles embedded therein, between said first and second structural components; curing said uncured magnetorheological elastomer at a predetermined temperature level and for a predetermined period of time while simultaneously subjecting said magnetorheological elastomer to a magnetic field so as to permanently align said particles embedded within said magnetorheological elastomer with said magnetic field such that said particles become aligned with respect to each other so as to subsequently determine the stiffness characteristics of said magnetorheological elastomer, as a function of a magnetic field, and thereby control the relative displacement of said suspension control arm with respect to said vehicle frame component.

The invention results in a non-linear or variable stiffness automotive vehicle mount, coupling, or suspension component which incorporates therein a magnetorheological (MR) elastomer or gel whose stiffness is variably adjustable or controllable over a wide range of values by means of a predeterminedly controllable magnetic field. In particular, the automotive vehicle component comprises a suspension bushing, and the variable, controllable magnetic field is generated by means of electromagnet structure which is integrally incorporated within the suspension bushing structure. More particularly, the specific structure of the magnetorheological (MR) elastomer suspension bushing constructed in accordance with the present invention may comprise a suspension bushing shaft, an inner steel cylinder annularly surrounding the suspension bushing shaft, a magnetorheological (MR) elastomer annularly surrounding the annular inner steel cylinder, and an outer steel cylinder annularly surrounding the annular magnetorheological (MR) elastomer. An annular coil is disposed about an outer peripheral surface portion of the annular inner steel cylinder so as to be interposed between the annular inner steel cylinder and the annular magnetorheological elastomer, and the coil is adapted to be electrically connected to the automotive vehicle electrical system by means of suitable electrical leads and connectors. The elastomer comprises an elastomer host material, which is preferably natural rubber, having magnetisable particles dispersed throughout the host elastomer. By applying suitable predetermined amounts of electrical current to the suspension bushing coil, a variable magnetic field is generated which correspondingly results in the elastomer exhibiting variably controlled shear and longitudinal viscoelastic moduli as well as force, stiffness, and compliance values. These values can therefore be utilised to control or adjust the vehicle suspension as functions of, or in response to, various vehicle operation parameters, such as, for example, vehicle speed, engine speed, vehicle acceleration, wheel height, and the like, in order to in fact optimise or minimise the vehicle ride, handling, chassis noise, vibration, harshness, and the like.

The invention will now be described further, by way of example, with reference to the accompanying drawings, in which:
FIGURE 1 is a schematic, cross-sectional view of a magnetorheological (MR) elastomer suspension bushing in accordance with the invention;
FIGURE 2 is a graphical plot illustrating the peak-to-peak force in response to an oscillatory deformation of the bushing, which is a characteristic or parameter related to the stiffness of the bushing, as a function of the applied electrical current;
FIGURE 3 is a graphical plot similar to that of FIGURE 2, illustrating, however, the bushing stiffness as a function of the applied electrical current; and
FIGURE 4 is a graphical plot illustrating the shear modulus, which is a characteristic or parameter related to the stiffness of the elastomer, as a function of the applied flux density or magnetic field.

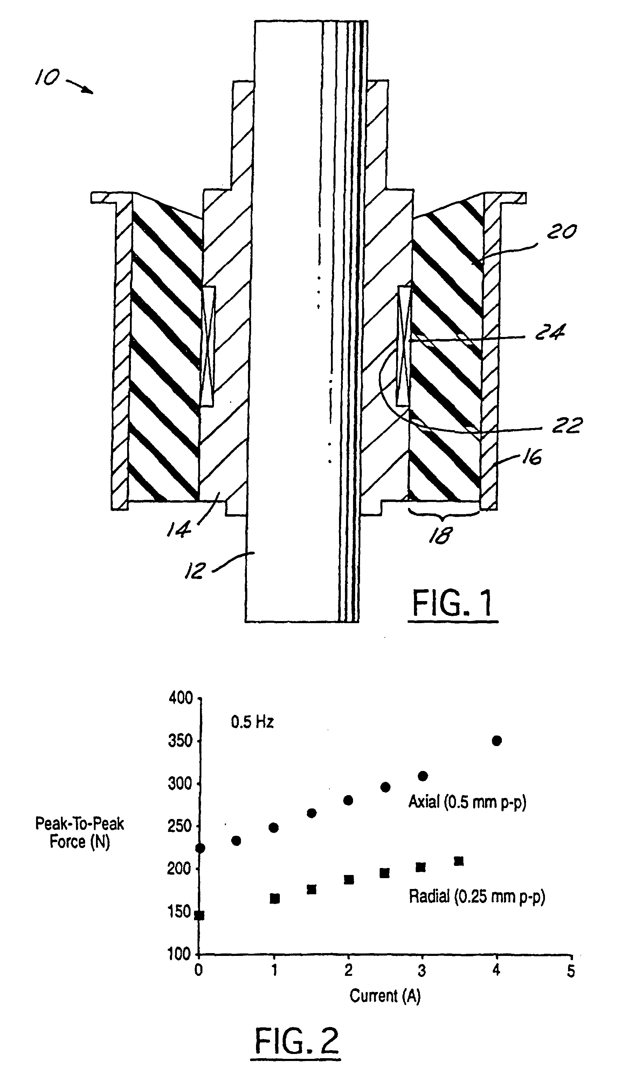

Referring now to the drawings, and more particularly to FIGURE 1 thereof, there is schematically illustrated a magnetorheological (MR) elastomer suspension bushing constructed in accordance with the present invention and generally indicated by the reference character 10. It is to be initially noted that while the manifestation of the principles of the present invention has been specifically illustrated in connection with, or in the form of, an automotive vehicle suspension bushing, the present invention is likewise adapted to the formulation or fabrication of various other automotive vehicle components, such as, for example, engine mounts, transmission mounts, chassis mounts, shock mounts, strut mounts, drivetrain dampers, shock absorbers, and the like. As can be appreciated from FIGURE 1, the magnetorheological (MR) elastomer suspension bushing 10 according to the present invention is seen to comprise a central shaft or rod component 12 which, in actual practice, may comprise a bolt member which is fixedly connected to the automotive vehicle subframe, not shown. A first, radially inner, annular cylinder 14, which may be fabricated from a suitable low-carbon steel, is disposed about the shaft or bolt 12 and is fixedly attached thereto by suitable fastening means, not shown. A second, radially outer, annular cylinder 16, which may also be fabricated from a suitable low-carbon steel, is disposed about the first, radially inner cylinder 14 such that an annular space 18 is defined therebetween, and the second, radially outer cylinder 16 is adapted to be connected to a control arm, not shown, of the vehicle suspension. While the cylinders 14 and 16 may be fabricated from low-carbon steel, they may likewise be fabricated from other materials, for example, cast or gray iron, or silicon, ferritic, nickel, or cold-rolled steel, as well as powder-processed versions of such materials. The annular space 18 is filled with a magnetorheological (MR) elastomer 20 which is fabricated in accordance with the present invention such that the operating characteristics of the present invention, particularly those which are to be advantageously exhibited by an automotive vehicle suspension bushing, are able to be achieved.

More particularly, the magnetorheological elastomer 20 of the present invention may comprise an elastomer of natural rubber (comprising polyisoprene), silicone, polybutadiene, polyethylene, styrene butadiene rubber (SBR), nitrile rubber, polychloroprene, polyisobutylene, synthetic polyisoprene, and blends thereof. The elastomer has particulate materials embedded therein. These particulates are those that are magnetisable by means of an applied magnetic field, that is, particulates having paramagnetic, ferrimagnetic, or ferromagnetic properties. Examples of preferred paramagnetic particulates inside compounds comprising oxides, chlorides, sulfates, sulfides, hydrates, and other organic or inorganic compounds of cerium, chromium, cobalt, dysprosium, erbium, europium, gadolinium, holmium, iron, manganese, neodymium, nickel, praesodymium, samarium, terbium, titanium, uranium, vanadium, and yttrium. Preferred paramagnetic elements and alloys include gadolinium, various stainless steels, and other alloys of iron, nickel, manganese, and cobalt, with or without other non-magnetic elements, Preferred ferrimagnetic particulates include magnetite (Fe 3 0 4) and other compounds of iron and oxygen, and a third metallic component. Preferred ferromagnetic materials include iron, nickel, and cobalt, as well as alloys of these and other materials. The size of the magnetisable particles used within the magnetoviscoelastic composites can vary widely, such as, for example, from 10 nanometres to several millimetres. The embedding host material for the particulates can be any substantially non-magnetic viscoelastic solid material, examples of which have been set forth hereinbefore, and the preferred materials would include those comprising either a liquid or a solid precursor that can be substantially uniformly mixed with the magnetisable particles, and subsequently processed into its final solid form through means of various thermal, chemical, optical, electrical, or other treatments or processes. More specifically, a solid precursor comprising an uncured natural rubber or synthetic polyisoprene mixture is preferred as the embedding host material due to the advantageous operative and processing characteristics of such materials, such as, for example, their handling capabilities, temperature resistance properties, and durability.

Referring again to FIGURE 1, the outer peripheral surface of the first, radially inner, annular cylinder 14 is provided with an annular recess 22 within which an annular electromagnetic wire coil 24 is disposed. In particular, the coil 24 comprises three hundred ten (310) turns of a twenty-two (22) gauge copper wire provided with type H (high temperature) polymeric insulation in order to insure the integrity thereof during usage. Wire leads, not shown, extend from the coil 24 to a suitable source of electrical power which, in the case of a suspension bushing utilised within an automotive vehicle, may comprise the vehicle battery. This coil 24 is utilised both in connection with the actual initial fabrication or construction of the suspension bushing 10 in its finalised form or state, as well as supplemental energisation of the finalised suspension bushing 10 during actual operative use of the automotive vehicle. More particularly, in connection with the actual initial fabrication of the bushing 10, a suitable magnetorheological elastomer is introduced or deposited within the annular space 18 defined between the first, radially inner cylinder 14 and the second, radially outer cylinder 16, and the elastomer 20 is cured at a temperature of approximately 150°C, and for a time period of between ten (10) and thirty (30) minutes, during which time a current of approximately three (3) amps is supplied to the coil 24 in order to generate a requisite magnetic field in order to permanently align the particulates, embedded within the elastomer 20. Suitable metal-to-rubber bonding agents are applied to the metal-rubber interfaces prior to curing in order to prevent any delamination of the elastomer from the metal cylinders. The magnetic field is generated by the electromagnet structure comprising the first and second cylinders 14 and 16, and the coil 24. More specifically, the magnetic field and lines of flux extend, in effect, upwardly within the inner cylinder 14, across the top of the elastomer 20, downwardly within the outer cylinder 16, and across the bottom of the elastomer 20 so as to complete the magnetic circuit. The particulates embedded with in the elastomer are therefore aligned or oriented, in effect into head-to-tail, north-south, arrangements comprising chain or columns which subsequently determines the stiffness and shear modulus properties of the suspension bushing under variable operative conditions, that is, when a predetermined electrical current is applied to the coil 24 so as to provide the suspension bushing with desirable stiffness and shear modulus properties, or even when current is not applied to the coil 24 whereby the suspension bushing 10 will nevertheless have an inherent or residual amount of stiffness and shear modulus values due to the initial permanent alignment of the particulates within the elastomer 20 as constructed in accordance with the present invention. Such characteristics will be discussed further in more detail hereinafter. It is to be emphasised at this juncture, however, that the aforenoted application of the current to the coil 24 during the elastomer curing process is critical in that the permanent alignment of the particulates within the elastomer can only be achieved while the essentially or substantially solid host elastomer is still in its somewhat softened, uncured state. Specific examples of a magnetorheological (MR) elastomer which may be produced in accordance with the principles of the present invention will now be described:

### Example 1

A first magnetorheological (MR) elastomer was produced in accordance with the present invention by embedding iron particles within a natural rubber elastomer host. The particulates were carbonyl iron particles which were produced by the reduction of iron pentacarbonyl, Fe(CO)₅, within a hydrogen atmosphere. The particles were approximately five 5 micrometers in average size and were Grade R-2521 obtainable from ISP TECHNOLOGIES, INC., formerly GAF. The exact composition of the mixture was as follows: natural rubber SMR-L, one hundred (100) parts per hundred rubber (phr) by weight; carbonyl iron powder, 700 phr; ZnO, 3 phr; stearic acid, 2 phr; Agerite resin D, which is an antioxidant and available from VANDERBILT CHEMICALS, 1 phr; Sundex 790, which is an aromatic oil available from SUN OIL COMPANY, 10 phr; and methyl tuads, which is a sulfur-bearing compound, 3.5 phr. The volume fraction of iron within this compound was approximately 48%.

### EXAMPLE 2

A second magnetorheological (MR) elastomer was produced in accordance with the present invention by embedding iron particles within a natural rubber elastomer host. The particulates were carbonyl iron particles which were produced by the reduction of iron pentacarbonyl, Fe(CO)₅, within a hydrogen atmosphere. The particles were approximately five (5) micrometers in average size, and were Grade R-2521 powders obtainable from ISP INDUSTRIES, INC., formerly GAP. The exact composition of the mixture was as follows: natural rubber SMR-L, one hundred (100) parts per hundred rubber (phr) by weight; carbonyl iron powder, 550 phr; ZnO, 5 phr; stearic acid, 2 phr; Agerite resin D, which is an antioxidant and available from VANDERBILT CHEMICALS, 2 phr; Sundex 790, which is an aromatic oil available from SUN OIL COMPANY, 5 phr; CBS, available from VANDERBILT CHEMICALS, 0.5 phr; and sulfur, 2.5 phr. The volume fraction of iron within this compound was approximately 37%.

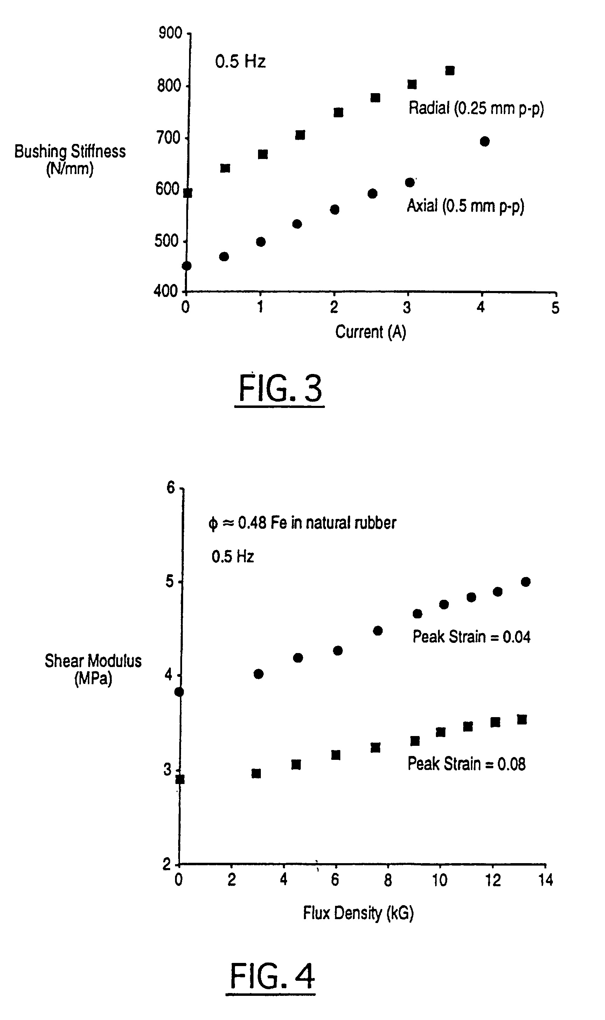

As has been noted hereinbefore, with the magnetorheological (MR) elastomers exemplified above and as incorporated within the suspension bushing 10 disclosed within FIGURE 1, predeterminedly variable stiffness and modulus values characteristic of the bushing can be achieved by suitably varying the amount of current applied to the coil 24 which will, in turn, vary the flux density of the generated magnetic field. More particularly, the stiffness and peak-to-peak force characteristics of the bushing of FIGURE 1, along a direction which is parallel to the longitudinal axis of the bushing, were measured and determined by using an INSTRON 1331 servohydraulic tester. A low-carbon steel shaft was pinned to the radially inner cylinder 14 of the bushing 10, and the shaft and inner cylinder were oscillated mechanically with varying amplitude and frequency. The force transmitted through the magnetorheological (MR) elastomer to the outer cylinder 16 was measured with a load cell. Similar apparatus was also used to measure and determine the stiffness and peak-to-peak force characteristics of the bushing along a radial direction with respect to the bushing, that is, along a direction perpendicular to the longitudinal axis thereof. The results of such testing and measuring are disclosed within FIGURES 2 and 3 which are graphical plots or diagrams which illustrate or show the peak-to-peak force and the bushing stiffness, respectively, as functions of the applied current. The axial and radial measurements or test results are plotted separately upon the same graph, and it is seen that the axial results were achieved in connection with a peak-to-peak displacement of 0.5 mm, whereas the radial results were achieved in connection with a peak-to-peak displacement of 0.25 mm, and both sets of tests were conducted with a mechanical frequency of 0.5 Hz. Several significant conclusions can be derived from such test results.

It is firstly noted, for example, from such test results that the particularly fabricated or structured bushing which was tested exhibited an axial stiffness value of four hundred forty (440) Newtons/mm when the current applied to the coil 24 was zero. This would then provide the vehicle suspension with an initial or base amount of stiffness which would correspond to a typical or conventional "soft" to "medium" ride. An increased amount of stiffness can then be provided within the vehicle suspension by accordingly increasing the applied current to the coil 24. For example, as can be further appreciated from the graphical plot of FIGURE 3, when the applied current is increased to four Amps, the axial stiffness characteristic of the suspension bushing is increased to approximately seven hundred (700) Newtons/mm, an increase of approximately sixty percent (60%). Similar results are also apparent in connection with the radial, torsional, and coning stiffness characteristics of the bushing. It is to be further noted that after an application to the bushing of a predetermined amount of applied current, when the applied current is subsequently terminated, the stiffness characteristic of the bushing reverts to the initial or base value in a response time that is much less than one cycle of the mechanical oscillation, as determined by the inductive time constant of the device which was measured to be thirteen milliseconds.

With reference being additionally made to FIGURE 4, wherein the shear modulus, in Mega Pascals (MPa), of a magnetorheological (MR) elastomer is graphically plotted as a function of the applied magnetic field or flux density, in kilogauss (kG), it is seen that the shear modulus, which is directly related to stiffness as is conventionally known, likewise exhibits a substantial increase in its magnitude upon the application of, or when subjected to, a magnetic field. The shear modulus characteristics of the elastomer were determined by means of an INSTRON 1331 servohydraulic tester wherein test discs of the elastomer were sheared by suitable oscillatory motion applied thereto. The flux was detected by means of an integrating fluxmeter, for example, a WALKER SCIENTIFIC MF-3D, and as noted from the graphical plot of FIGURE 4, the flux density was varied continuously from zero (0) to fourteen (14) kilogauss. The shear modulus was measured at two different strain amplitudes, and the mechanical strain frequency was 0.5 Hz. The shear modulus is strongly dependent upon the strain amplitude as is the case for all elastomeric materials. As can be further appreciated from FIGURE 4, in the absence of a magnetic field, the magnetorheological elastomer exhibited a shear modulus of approximately 3.8 MPa at the lower strain amplitude of 0.04, and by applying a flux density of 13 kG, the shear modulus increased to approximately 5.0 MPa representing an increase in the shear modulus of approximately 1.2 MPa or, in other words, an increase of more than thirty percent (30%) with respect to the initial or base modulus value. The significant teaching to be appreciated is thus seen to reside in the fact that as the applied electrical current and the corresponding flux density increase, enhanced magnetic attractive forces or bonding between the particulates is achieved which increases the stiffness and modulus characteristics of the elastomer, and the overall suspension bushing, as graphically illustrated. In turn, the movements or displacements of the suspension control arm, to which the outer cylinder 16 is connected, is suitably controlled with respect to the vehicle subframe to which the inner cylinder 14 and the shaft or rod 12 are connected.

It is lastly noted that while a particularly structured suspension bushing may have, for example, the stiffness characteristics and shear modulus values graphically illustrated within FIGURES 3 and 4, bushings constructed in accordance with the present invention can be provided with operative stiffness and modulus characteristics or values which are different from those graphically shown in FIGURES 3 and 4 by appropriately changing the geometrical and material parameters of the bushing. For example, altering the axial length or thickness of the bushing elastomer will result in different stiffness and modulus characteristics, as will altering the material composition of the elastomer. Voids or holes, or small air bubbles, can be introduced into the elastomer at strategic locations thereof so as to alter the directional stiffness properties of the bushing.

From the foregoing it may be seen and appreciated that the present invention has significant applications within the automotive vehicle environment. As a result of the disclosed magnetorheological (MR) elastomer system, the stiffness characteristics of the elastomer are predeterminedly controllable by the application of a magnetic field whereby such magnetorheological (AIR) elastomers are useful within various automotive vehicle components or systems, such as, for example, engine mounts, transmission mounts, chassis mounts, shock mounts, drivetrain dampers, and suspension bushings. Incorporation of such magnetorheological (MR) elastomers within such components will allow their dynamic stiffness characteristics to be suitably controlled by a magnetic field generated by means of an operatively associated electromagnet integrally incorporated into the component and powered by means of the vehicle battery. Accordingly, there is no need to provide a separate high-voltage source of electrical power, and concern attendant the usage of such a high-voltage source of electrical power within the automotive vehicle environment is obviated. In addition, in view of the usage of such solid elastomers or gels in accordance with the present invention, special seals, which would otherwise be required in connection with electrorheological (ER) or magnetorheological (MR) fluids, are also rendered unnecessary. The present invention can thus be used in connection with vehicle design and calibration requirements for product development of vehicular components exhibiting a predetermined or optimum fixed-value characteristic, or alternatively, the present invention can be incorporated within production vehicles wherein operating conditions desirably mandate operative components exhibiting variable-rate characteristics. More particularly, for example, the suspension bushing of the present invention could have its spring rate or stiffness varied in an ON-OFF or continuous manner in response to computer-controlled inputs to the electrical coil based upon detected engine speed, vehicle speed, vehicle acceleration, wheel height, and the like, in order to optimise the vehicle ride, handling, steering, noise, vibration, and harshness characteristics. Other control schemes for varying the spring or stiffness of the suspension bushing according to the present invention could comprise pulsewidth and pulse-frequency modulation techniques. Still further, the elastomers can be varied as a function of the service life of the vehicle in order to minimise component ageing effects.

## Claims

1. A method of making and using a variable stiffness suspension bushing for controlling the relative displacement of a suspension control arm in an automotive vehicle relative to a frame component of said vehicle, comprising the steps of:
providing a first structural component (16) for connection to a suspension control arm of a vehicle;
providing a second structural component (14) for connection to a frame component of said vehicle;
**characterised by** interposing an uncured magnetorheological elastomer, having magnetisable particles embedded therein, between said first and second structural components;
curing said uncured magnetorheological elastomer at a predetermined temperature level and for a predetermined period of time while simultaneously subjecting said magnetorheological elastomer to a magnetic field so as to permanently align said particles embedded within said magnetorheological elastomer with said magnetic field such that said particles become aligned with respect to each other so as to subsequently determine the stiffness characteristics of said magnetorheological elastomer, as a function of a magnetic field, and thereby control the relative displacement of said suspension control arm with respect to said vehicle frame component.

2. A method as claimed in Claim 1, further comprising the steps of:
operatively connecting an electrical coil to said magnetorheological elastomer; and
supplying a predetermined amount of electrical current to said coil so as to generate said magnetic field.

3. A method as claimed in Claim 2, wherein:
said predetermined curing temperature is approximately 150°C;
said predetermined curing time is 10-30 minutes; and
said predetermined amount of electrical current is approximately 3 Amps.

4. A method as claimed in any one of the preceding claims, further comprising the steps of:
providing said second structural component (14) in the form of an annular cylinder;
providing an annular recess (22) within an outer peripheral portion of said annular cylinder for housing said electrical coil (24);
providing said first structural component (16) in the form of another annular cylinder which is radially spaced from and annularly surrounds said annular cylinder of said second structural component (14); and
disposing said magnetorheological elastomer (20) within an annular space defined between said annular cylinders of said first and second structural components.

5. A method of claimed in Claim 1, further comprising the steps of: operatively connecting an electrical coil to said magnetorheological elastomer; and supplying variable amounts of electrical current to said electrical coil so as to generate a variable magnetic field dependent upon the amount of electrical current supplied to said electrical coil and after said magnetorheological elastomer has been cured so as to vary said stiffness characteristics of said magnetorheological elastomer as a function of said electrical current supplied to said electrical coil and said magnetic field generated by said electrical coil and said first and second structural components, and thereby control said relative displacement of said suspension control arm with respect to said vehicle frame component.

## Patentansprüche

1. Verfahren zur Herstellung und Anwendung einer Federungsbuchse mit variabler Steifigkeit zur Kontrolle der relativen Bewegung zwischen einem Federungslenker in einem Kraftfahrzeug und einem Rahmenbauteil des besagten Fahrzeuges, folgende Schritte aufweisend:
Bereitstellung einer ersten Strukturkomponente (16) zum Anschluß an einen Federungslenker eines Fahrzeuges;
Bereitstellung einer zweiten Strukturkomponente (14) zum Anschluß an ein Rahmenbauteil des besagten Fahrzeuges;
**gekennzeichnet durch**
die Zwischenschaltung eines nicht ausgehärteten magnetorheologischen Elastomers mit darin eingebetteten magnetisierbaren Teilchen zwischen besagten ersten und zweiten Strukturkomponenten;
die Aushärtung des besagten nicht ausgehärteten magnetorheologischen Elastomers bei einer vorgegebenen Temperatur und für einen vorgegebenen Zeitraum, während gleichzeitig besagtes magnetorheologisches Elastomer einem magnetischen Feld ausgesetzt wird, so daß besagte in dem besagten magnetorheologischen Elastomer eingebetteten Partikel bleibend in besagtem Magnetfeld ausgerichtet werden, so daß besagte Partikel zueinander ausgerichtet werden, derart, daß sie anschließend die Steifigkeitscharakteristik des besagten magnetorheologischen Elastomers als Funktion eines magnetischen Feldes bestimmen und somit die relativen Bewegungen zwischen besagtem Federungslenker und besagtem Fahrzeugrahmenbauteil kontrollieren.

2. Verfahren nach Anspruch 1, außerdem folgende Schritte aufweisend:
die betriebsfähige Verbindung einer elektrischen Spule mit besagtem magnetorheologischen Elastomer; und
das Anlegen einer vorgegebenen Höhe elektrischen Stromes an besagter Spule, so daß besagtes magnetisches Feld erzeugt wird.

3. Verfahren nach Anspruch 2, worin:
besagte vorgegebene Aushärtetemperatur etwa 150°C beträgt;
besagte vorgegebene Aushärtezeit 10-30 Minuten beträgt; und
besagte vorgegebene Höhe elektrischen Stromes etwa 3 Ampere beträgt.

4. Verfahren nach einem beliebigen der vorangehenden Ansprüche, außerdem folgende Schritte aufweisend:
Vorsehen der besagten zweiten Strukturkomponente (14) in Form eines ringförmigen Zylinders;
Anbringen einer ringförmigen Aussparung (22) in einem äußeren Umfangsbereich des besagten ringförmigen Zylinders zur Aufnahme der besagten elektrischen Spule (24);
Vorsehen der besagten ersten Strukturkomponente (16) in Form eines weiteren ringförmigen Zylinders, welcher radial von besagtem ringförmigem Zylinder der besagten ersten Strukturkomponente (14) beabstandet ist und diesen umgibt; und
Anordnen des magnetorheologischen Elastomers (20) in einem zwischen besagten ringförmigen Zylindern der beiden ersten und zweiten Strukturkomponenten gebildeten Ringraum.

5. Verfahren nach Anspruch 1, außerdem folgende Schritte aufweisend:
die betriebsmäßige Verbindung einer elektrischen Spule mit besagtem magnetorheologischem Elastomer; und
das Anlegen variabler elektrischer Stromhöhen an besagte elektrische Spule, so daß ein variables magnetisches Feld erzeugt wird, welches von der Höhe des der besagten elektrischen Spule zugeführten elektrischen Stromes abhängig ist, und nachdem besagtes magnetorheologisches Elastomer ausgehärtet worden ist, so daß besagte Steifigkeitsmerkmale des besagten magnetorheologischen Elastomers in Abhängigkeit von besagtem, der besagten elektrischen Spule zugeführtem elektrischem Strom und von besagtem, zwischen der besagten elektrischen Spule und den besagten ersten und zweiten Strukturkomponenten erzeugtem Magnetfeld variiert wird, so daß die relativen Bewegungen zwischen besagtem Federungslenker und besagtem Fahrzeugrahmenbauteil kontrolliert werden.

## Revendications

1. Procédé de fabrication et d'utilisation d'un pivot de suspension à rigidité variable destiné à commander le déplacement relatif d'un triangle de suspension dans un véhicule automobile par rapport à un composant de châssis dudit véhicule, comprenant les étapes consistant à :
prévoir un premier composant de structure (16) destiné à un raccordement à un triangle de suspension d'un véhicule,
réaliser un second composant de structure (14) destiné à un raccordement à un composant de châssis dudit véhicule,
**caractérisé par** l'interposition d'un élastomère magnétorhéologique non polymérisé, comportant des particules pouvant être aimantées noyées dans celui-ci, entre lesdits premier et second composants de structure,
polymériser ledit élastomère magnétorhéologique non polymérisé à un niveau de température prédéterminé et pendant un intervalle de temps prédéterminé tout en soumettant simultanément ledit élastomère magnétorhéologique à un champ magnétique de façon à aligner de façon permanente lesdites particules noyées à l'intérieur dudit élastomère magnétorhéologique avec ledit champ magnétique de sorte que lesdites particules soient alignées les unes par rapport aux autres afin de déterminer ensuite les caractéristiques de rigidité dudit élastomère magnétorhéologique, en fonction d'un champ magnétique, et commander ainsi le déplacement relatif dudit triangle de suspension par rapport audit composant de châssis du véhicule.

2. Procédé selon la revendication 1, comprenant en outre les étapes consistant à :
raccorder de façon fonctionnelle une bobine électrique audit élastomère magnétorhéologique, et
fournir une quantité prédéterminée de courant électrique à ladite bobine de façon à engendrer ledit champ magnétique.

3. Procédé selon la revendication 2, dans lequel :
ladite température de polymérisation est d'approximativement 150°C,
ladite durée de polymérisation prédéterminée est de 10 à 30 minutes, et
ladite quantité prédéterminée de courant électrique est d'approximativement 3 Ampères.

4. Procédé selon l'une quelconque des revendications précédentes, comprenant en outre les étapes consistant à :
réaliser ledit second composant de structure (14) sous la forme d'un cylindre annulaire,
réaliser un évidement annulaire (22) à l'intérieur d'une partie de périphérique extérieur dudit cylindre annulaire en vue de recevoir ladite bobine électrique (24),
réaliser ledit premier composant de structure (16) sous la forme d'un autre cylindre annulaire qui est radialement espacé dudit cylindre annulaire dudit second composant de structure (14) et entoure celui-ci de façon annulaire, et
disposer ledit élastomère magnétorhéologique (20) à l'intérieur d'un espace annulaire défini entre lesdits cylindres annulaires desdits premier et second composants de structure.

5. Procédé selon la revendication 1, comprenant en outre les étapes consistant à : raccorder de façon fonctionnelle une bobine électrique audit élastomère magnétorhéologique, et fournir des quantités variables de courant électrique à ladite bobine électrique de façon à engendrer un champ magnétique variable suivant la quantité de courant électrique fournie à ladite bobine électrique et après que ledit élastomère magnétorhéologique a été polymérisé de façon à faire varier lesdites caractéristiques de rigidité dudit élastomère magnétorhéologique en fonction dudit courant électrique fourni à ladite bobine électrique et dudit champ magnétique engendré par ladite bobine électrique et auxdits premier et second composants de structure, et commander ainsi ledit déplacement relatif dudit triangle de suspension par rapport audit composant de châssis du véhicule.
